# EUROPEAN PATENT APPLICATION

(11) **EP 4 657 039 A1**
(43) Date of publication of application: **03.12.2025**
(21) Application number: 24203668.9
(22) Date of filing: 30.09.2024
(51) Int. Cl.: G01M 5/00

(54) **SYSTEM TO MONITOR INTEGRITY OF A STRUCTURE**

(30) Priority: 29.05.2024 US 202463652681 P
(71) Applicant: Yehuda, Sharon, 9073512 Mevasseret Zion (IL)
(72) Inventor: Yehuda, Sharon, 9073512 Mevasseret Zion (IL)
(74) Representative: Caldon, Giuliano

(57) **Abstract**

A system to monitor integrity of structures and/or other structures by monitoring vibrations.

## Description

### RELATED APPLICATION/S

This application claims the benefit of priority under 35 USC §119(e) of U.S. Provisional Patent Application No. 63/652,681 filed 29 May 2024, the contents of which are incorporated herein by reference in their entirety.

### FIELD AND BACKGROUND OF THE INVENTION

The present invention, in some embodiments thereof, relates to a system to monitor integrity of buildings and/or other structures, and, more particularly, but not exclusively, by monitoring response to stresses.

The structural integrity of a structure may decrease over time as a result of dynamic events, such as earthquakes, vibrations resulting from natural constraints in the environment, such as external constraints e.g. wind load, vehicle traffic, infrastructure work to the structure surroundings, etc., and/or internal constraints such as machines inside the structure, traffic within the structure, etc.

KR100669070 appears to disclose a wireless telemetry system for monitoring a structure to wirelessly transmit dynamic data by a real time or a semi real time after obtaining the dynamic data by comprising a MEMS (Micro-ElectroMechanical System) type acceleration sensor, a micro controller, an outside memory, and a wireless modem. In a wireless telemetry system for monitoring a structure, a sensor system module includes an acceleration sensor which senses an oscillation of the structure, wherein a plurality of sensors is installed on each position of the structure for measuring movement properties thereof. A control/process module obtains, processes, and stores dynamic data generated from the acceleration sensor as an oscillation signal, and performs a measurement system control and a measuring state determination in accordance with a control signal of a main computer. A wireless modem module includes a sensor side modem and a main computer-side modem. The sensor-side modem directly connected to the control/process module wirelessly transmits the dynamic data generated therefrom to the main computer and receives each control signal generated from the main computer. The main computer-side modem is designated to be capable of wirelessly communicating with the sensor-side modem for communication between the control/process module and the main computer.

Additional art includes US Patent no. 8,494,790, RU2008106992, US application No. 2019/0057169, US application No, 2020/0408720, US patent No. 10,671,767, US application No. 2006/00248954, Whelan, M.J., Gangone, M.V, Janoyan, K.D., and Jha, R. (2009) "Real-Time wireless vibration monitoring for operational modal analysis of an integral abutment highway bridge," Engineering Structures 31(10), 2224-2235. and de Roeck, G.; Peeters, B.; Ren, W. X. Benchmark Study on System Identification Through Ambient Vibration Measurements, #168, Proc. SPIE Vol. 4062, Proceedings of IMAC-XVIII: A Conference on Structural Dynamics., p. 1106, Jan 2000, 2000SPIE.4062.1106D.

### SUMMARY OF THE INVENTION

According to an aspect of some embodiments of the invention, there is provided a method for monitoring building integrity, the method including: detecting vibrations of a structure by at least one sensor; collecting data from the at least one sensor to a microcontroller; analyzing the data to determine structural integrity of the structure.

According to some embodiments of the invention, the method further includes generating an engineering identity structural card of the building based on natural vibration data collected.

According to some embodiments of the invention, the analyzing includes analyzing data from the sensors in conjunction with data from at least one database.

According to some embodiments of the invention, the analyzing facilitates determining changes to the natural vibration data from the data in the engineering identity card of the building.

According to some embodiments of the invention, the method further includes alerting a user to a determined change in the natural vibration data from the data in the engineering identity card of the building.

According to some embodiments of the invention, the vibrations are natural vibrations.

According to some embodiments of the invention, the vibrations include forced vibrations, the method further including forcing the vibrations.

According to an aspect of some embodiments of the invention, there is provided a microelectromechanical system for monitoring building integrity including: a microcontroller; a sensor connected to the microcontroller; a power source configured to power the sensor and the microcontroller; and a data analysis system configured to analyze data received from the sensor to determine a condition of a structure.

According to some embodiments of the invention, the system is configured to be mounted to, at least one part of the building.

According to some embodiments of the invention, the microelectromechanical system further includes: a memory storage device connected to the microcontroller.

According to some embodiments of the invention, the sensor is selected from the group consisting of an accelerometer, gyroscope, seismometer, seismograph accelerations, motion seismograph, stroboscope, tachometer, rotameter(gyroscope), motion sensors, magnetometer, infrasound sensor or any combination thereof.

According to some embodiments of the invention, the power source is a rechargeable battery, a connection to a local power grid, or a combination thereof.

According to some embodiments of the invention, the sensor is connected to at least one part of the building selected from an elevator, supporting wall, roof, basement floor, structural parts, beams, pillars, foundation, or any combination thereof.

According to some embodiments of the invention, the system further includes a data relay.

According to some embodiments of the invention, the data relay is selected from the group consisting of a network, wi-fi, cellular network, satellite network, LAN, the Internet, a cellular model, a SIM module, an app, a USB interface, a Bluetooth transceiver, or any combination thereof.

According to some embodiments of the invention, the system further includes at least one local or remote database.

According to some embodiments of the invention, the database is selected from the group consisting of an engineering database, geological database, weather database, traffic database, event database, materials database, database of recorded data from the building or surroundings, or any combination thereof.

According to some embodiments of the invention, the data analysis system is configured to analyze data from the sensors in conjunction with data from the databases.

According to some embodiments of the invention, the system further includes a user interface.

According to some embodiments of the invention, the user interface is selected from the group consisting of a dedicated computing device, personal computer, laptop, tablet, cellular phone, smart watch, cloud, an app, a USB interface, a Bluetooth transceiver, or any combination thereof.

According to some embodiments of the invention, the system further includes a warning device configured to alert a user by a signal, a siren, an announcement, flashing lights, a message, or any combination thereof.

According to some embodiments of the invention, the warning device is configured to provide a warning of structural weakening, collapse, partial collapse, a seismic event, or any combination thereof.

According to some embodiments of the invention, the system further includes a waterproof housing.

### DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.
In the drawings:
Fig. 1: A kit for monitoring building integrity, in accordance with an embodiment of the current invention.
Fig. 2: A kit for monitoring building integrity, in accordance with an embodiment of the current invention.
Figs. 3A-C: Identity data generated by a system to monitor building integrity including self-dynamic parameters, in accordance with an embodiment of the current invention.
Fig. 4: Design spectrum for an exemplary building, in accordance with an embodiment of the current invention.
Fig. 5: Exemplary computation of a vibration period, in accordance with an embodiment of the current invention.
Fig. 6: An illustration of velocity during vibrations, in accordance with some embodiments.
Fig. 7: Exemplary computation of a logarithmic damping coefficient, in accordance with some embodiments.
Fig. 8: A block diagram describing a system to monitor integrity of a structure, in accordance with an embodiment of the current invention.
Fig. 9: A flow diagram describing a system to monitor integrity of a structure, in accordance with an embodiment of the current invention.

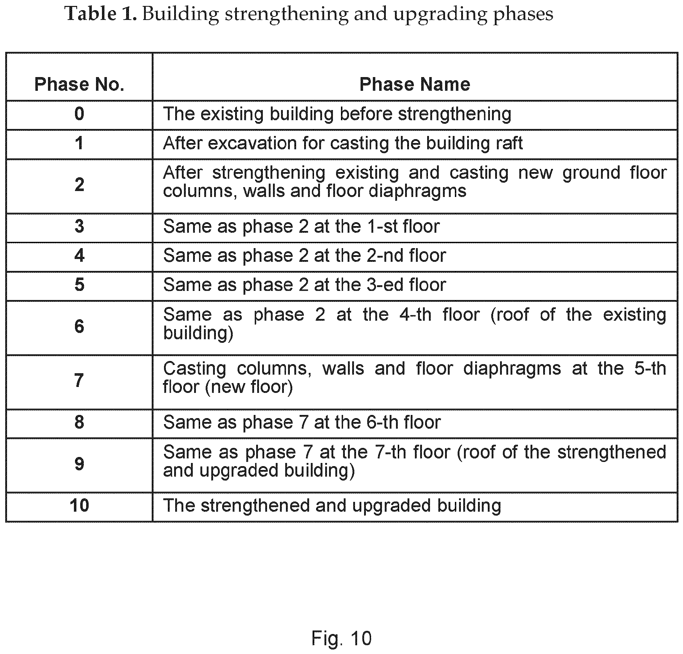

Fig. 10: Table 1 - exemplary building strengthening and upgrading phases, in accordance with an embodiment of the current invention.
Fig. 11: Table 2 - exemplary numerical values of vibration periods of a structure, in accordance with an embodiment of the current invention.

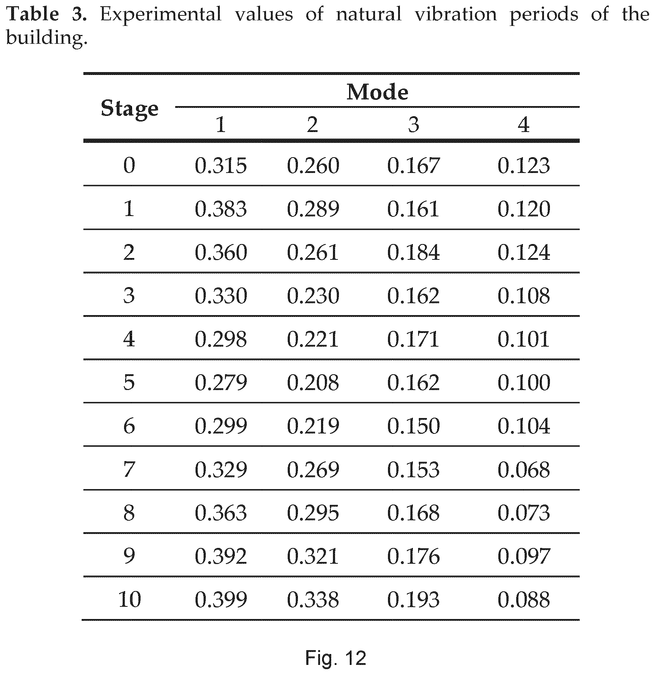

Fig. 12: Table 3 - exemplary experimental values of vibration periods of a structure, in accordance with an embodiment of the current invention.

### DESCRIPTION OF THE INVENTION

The present invention, in some embodiments thereof, relates to a system to monitor integrity of buildings and/or other structures, and, more particularly, but not exclusively, by monitoring vibrations.

### OVERVIEW

In some embodiments thereof, relates to a system to monitor integrity of structures. Optionally, the system may monitor the response of the structure to stresses. For example, the stresses include natural vibrations and/or forced vibrations. As used herein, unless stated otherwise, the term "structure" will be defined as "something that has been made or built from parts" and will be defined broadly. For example, unless otherwise stated, the term structure includes dams, bridges, various kinds of building (e.g., dwellings, office buildings, apartment buildings, storage facilities, power plants), waste storage sites, factories, tunnels, docks, drilling rigs, cranes, vehicles, (e.g., cars, trucks, trains, boats, aircraft), elevators, furniture, etc.

According to some embodiments, the system may include a microelectromechanical system (MEMS). Optionally, the system may comprise one or more one sensors. Optionally, the sensors may include an accelerometer, gyroscope, seismometer, infrasound sensor, seismograph accelerations and/or rotameter. Optionally, the sensors may be mounted on more than one axis (e.g., three vertical directions, x, y, z axes, etc.). Optionally, the sensors may send data to a local and/or remote data collection facility. Optionally, the sensors may send data in real time to a local and/or remote data collection facility (e.g., over a network, the Internet, etc.).

According to some embodiments, an engineering identity card of an existing building may be created based on vibration data collected by the sensors. Optionally, a user may analyze the data from the sensors to assess the "health" of the building. Optionally, by measuring vibrations over time, damping and/or resonance frequencies may be measured. Optionally, the vibrations may natural and/or forced. Optionally, a change in such sensor data signals may be interpreted as signifying a structural change in the building and/or require inspection. Optionally, certain changes in such data signals may be understood as danger signals.

According to some embodiments, the system may enable the diagnosis of buildings in real time and/or by review of collected data. Optionally, the data may be stored in a database. Optionally, data from routine and/or seismic events may be analyzed. Optionally, the collected data may be cross referenced with data from one or more engineering databases. Optionally, the collected data may be cross referenced with data from one or more additional buildings.

According to some embodiments, the system may be placed in and/or on a single building. Optionally, the system may be placed in and/or on a large number of buildings in an area, such as an industrial area, commercial area, residential area, city center, entire city, etc. Optionally, the system may assist in predicting and/or preventing tragic collapses.

In some embodiments, the system may be used to detecting illegal construction. and/or improper construction. For example, the system may detect when changes in a building due to construction. The system may detect changes in the building may when there was no building permit and/or changes that imply that the building activities where not the same as those permitted according to the building permit. The system may detect characteristics of a building that imply that construction was substandard.

In some embodiments, the system may be used in assessing damage, and/or locating damaged areas for rescue operations in catastrophic events (e.g., earthquakes, wars (e.g., artillery fire), etc.), and/or detecting explosions (e.g., terror events), and/or major accidents (e.g., trucks, aircraft, elevators, etc.), and/or traffic patterns (e.g., developing, changing, unusual e.g., a lot of vibration from traffic along a particular route) and the like. For example, information may be used to plan rescue operations and/or evacuations. For example, to protect rescue workers from structure failures and/or collapse. Optionally, the invention may relate to a building monitoring device, a system to monitor (any and/or all of the events above), a method to monitor (wherein the monitoring may include analysis and/or integration of data from multiple buildings and/or over various time frames).

In some embodiments, the system may be used for forensics e.g., to determine the cause and/or fault or a failure and/or accident and/or military campaigns and/or terrorist incidents. For example, this system may help determine whether military activities were conducted according military treaties and/or to determine who to cause of disastrous strikes. The system may help to uncover and/or prevent terrorist plots and/or to determine how a terrorist plot was executed and/or bring the perpetrators to justice.

In some embodiments, the system may be used to assess damage caused in a war, (e.g. a missile or bomb attack). For example, the system may estimate the level of damage to a structure, the association between the incident with damage, and the system may be used as a decision support tool (e.g., which structures to repair, which to use, how to perform repairs, to whom to charge repair costs etc.

In some embodiments, the system may be used for oversight of drivers (e.g., to determine if the G-forces too high [e.g., due to fast turns and/or braking and/or rapid passing over bumps etc.). Optionally, the system may be used to determine and/or monitor the stability of large items of furniture (e.g., bookshelves, storage racks, large flat screen walls, etc.) and/or decorative elements (e.g., sculptures, pillars, display cabinets, artifacts, etc.). Optionally, the system may be low cost.

In some embodiments, the system may track activities of a vehicle. For example, the system may track lateral accelerations of the vehicle, (e.g., due to driving too fast in turns, or lane changes). Optionally, the system may report proximity of a vehicle to a dangerous situation. In some embodiments, the system may be used to call emergency services, for example, when detecting an actual vehicle overturning. Vibration monitoring may facilitate detecting faults in the vehicle, such as parts that move at a frequency that is not the correct frequency or are not supposed to move at all. The system may be used in a virtual "black box" to gather data that will be used to understand the causes of accidents. Vibration monitoring in airplanes can make it possible to find faults in the airplane, such as parts that move at a frequency that is not the correct frequency or that are not supposed to move at all. This data may be available in real time allowing a system to predict and/or prevent aircraft failures. For example, such an indication before failure can appear at a certain speed of the aircraft, and a decrease in the speed of the aircraft will lead to a decrease in fluctuations and avoidance of failure, upon reaching a maintenance point.

In some embodiments, the system may be used to detect and/or identify underground excavations and tunnels, ability to identify tunnel excavations, or underground operations performed with mechanical or manual tools. For example, this may provide intelligence on operations of this type through the deployment of devices in the environment required for monitoring.

### SPECIFIC EMBODIMENTS

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

In some embodiments thereof, relates to a system to monitor building integrity. Optionally, the system may be a microelectromechanical system (MEMS). Optionally, the system may monitor forced and/or natural vibrations in a building. Optionally, the interpretation of vibrations of a building may include computing dynamic parameters of the building, such as cycle times, self-frequencies (natural frequencies) primary, speed, acceleration, resistance, Damping through building vibrations. Optionally, the vibrations may result from natural constraints in the building environment building vibrations resulting from natural constraints in the building environment, such as external constraints such as wind load, vehicle traffic, infrastructure work to the buildings surroundings, etc., and/or internal constraints such as machines inside the building, traffic within the building, etc. Optionally, the system may evaluate the empirical flexibility and/or rigidity of the building, such as translational rigidity and/or rotational rigidity.

In some embodiments, an engineering identity structural logbook for a building and structures may be created based on vibration data collected. Alternatively or additionally, data from forced vibrations may be used. For example, a vibration source may be applied to a building periodically over a long period of time and the response data to the vibrations may be used to test a building's response and/or change in response over a long period of time. Optionally, by measuring vibrations over time, damping and/or resonance frequencies may be measured. Optionally, any change in such signals may indicate a structural change in the building and/or require inspection and/or maintenance. Optionally, certain changes in such data signals may be understood as danger signals. Optionally, the system may enable the diagnosis of buildings in real time and/or by review of collected data. Optionally, the system may serve as a scientific tool to support decision-making for maintenance scheduling.

In some embodiments, the system data may be stored in a database. Optionally, the database may be local and/or remote. Optionally, data from routine and/or seismic events may be analyzed. Optionally, the collected data may be cross referenced with data from one or more additional buildings. Optionally, the collected data may be cross referenced with data from one or more engineering databases. Optionally, the collected data may be cross referenced with data from one or more online databases, e.g., weather, traffic, events, geology, materials, etc.

According to some embodiments, the data may be processed by a controller automatically and/or semi-automatically. Optionally, data may be processed on an external processor and/or by a user. Optionally, questionable data and/or results of interest may be flagged for a user's attention. For example, a Fourier transform methodology may be used e.g., to find dominant and/or resonant frequencies. Optionally, a damping rate may be computed.

In some embodiments, the system may include a processor programmed to detect warning signs that indicate that a building requires attention and/or may notify a user. In some embodiments, the system may include a processor programmed to present data on the condition of a building and/or an area of a city in a user-friendly form facilitating rapid evaluation of a situation by decision makers.

In some embodiments, horizontal and/or vertical vibrations of a building may be measured. Optionally eigenfrequencies may be estimated based on the measurements. Additionally, or alternatively, natural frequencies of structural elements (e.g., ceilings, Beams, systems of structural elements, bridges, etc.) may be analyzed. Optionally, results and/or changes in values over time may be used to monitor the structure, rigidity and/or integrity of a building and/or of components thereof.

In some embodiments, the effects of an event on a building, an accident to a vehicle etc. may be measured. Optionally, the event may be a natural event e.g., earthquake, flooding, subsiding land, hail, high winds (e.g., tornado, hurricane, monsoon, etc.) and/or a security event (e.g., a bomb blast, an accident, shelling, etc.). Optionally, the system may be used to monitor the effects of aging and/or normal loads on the building and/or mechanical loads e.g., turbines, engine rooms, construction to and/or around a structure.

In some embodiments, sensors may be used for monitoring an event. For example, in the case of an accident and/or a collapse of a building and/or a military strike, the sensors may facilitate forensic analysis and/or may assist in clarifying what really happened and/or who was at fault. For example, data from sensors of embodiments of the current invention may be used to estimate the degree of damage to the structure before a collapse, when it was damaged, what triggered the collapse and/or how it was damaged. The Data may be used to estimate the degree of damage from the incident itself. This may help documentation of the incident and associating of damage to the structure with the incident. For example, data may be used to estimate which parts of a structure (wings/components) were damaged and/or when damage to each component occurred and/or the degree of damage that was caused to a component by a certain event and/or the degree of damage that a component had absorbed at a given time. For example, this may be used to determine which event was material in causing the collapse and/or whether the damage to the building was critical at a certain time (for example, when a building inspector approved the building as safe).

In some embodiments, sensors may be used to monitor behavior. For example, if a vehicle is consistently subject to large G-forces, the driver may be taking turns too fast and/or going over bumps and/or changing lanes too fast. The system may be used to determine the proximity and/or involvement of the vehicle in a dangerous event.

In some embodiments, a system may be used to monitor compliance with safety and/or other ordinances. Optionally, the system may be used to determine the safety of a structure under different scenarios and/or planning emergency procedures (e.g., when and whether and how a building is to be evacuated and/or used during various events, maximum loading, permissibility of various changes in the structure).

In some embodiments, the system may provide a warning of structural weakening and/or collapse and/or partial collapse and/or a seismic event. Optionally, the warning may be in the form of a signal, such as a siren, an announcement, flashing lights, an alert to rescue services, a message over a network (e.g., wi-fi, cellular network, satellite network, LAN, etc.), etc. or any combination thereof.

In some embodiments, the system may comprise a microelectromechanical system (MEMS).

In some embodiments, the system may comprise at least one sensor. Optionally, the system may include multiple sensors of the same or different types. Optionally, the sensors may be in various locations in the building. Optionally, the system may include acceleration sensors in one or more directions, (e.g., three mutually perpendicular directions) and/or a vertical speed sensor. Optionally, the system may comprise additional sensors, such as an accelerometer, gyroscope, seismometer, infrasound sensor, acceleration seismograph, motion seismograph, velocity seismograph, stroboscope, tachometer, rotameter(gyro), motion sensors, magnetometer, etc. or any combination thereof.

In some embodiments, the sensors may send data to a local and/or remote server and/or data collection device. Optionally, the sensors may send data in real time to a local and/or remote server and/or data collection device (e.g., controller, computer, laptop, tablet, cellular phone, smart watch, cloud, etc.) and/or facility (e.g., over a network such as wi-fi, cellular network, satellite network, LAN, etc., the Internet, etc.). Optionally, the system may include a cellular model and/or a SIM module. Optionally, the system may include an interface for user access (e.g., an app, a USB interface and/or a Bluetooth transceiver). Optionally, the system may be conveniently and/or simply operated by an app on a user interface, e.g., a computer, laptop, tablet, cellular phone, etc.

Alternatively, and/or additionally, in some embodiments, the system may use secondary data to provide a more sensitive system. Optionally, integration of primary and secondary data may provide fewer false alarms (e.g., compiling data from multiple sensors, comparison to previous data, comparison to data from adjacent buildings, etc.). Optionally, the system may include multiple sensors. Optionally, a warning may be based on multiple signals. Optionally, sensors may be constantly functioning and/or may be activated periodically, e.g., at preselected times, such as when there is less internal and/or external traffic, etc. Optionally, the system may integrate data from different sources. For example, the system may integrate sensor data, traffic data, location data, data about weather, data about time, data on events in the surrounding area, geological data, physical parameters of materials data, etc. to decide whether there is cause for concern about the buildings' structural integrity.

In some embodiments, the system may be placed in and/or on a single building. Optionally, the system may be placed in and/or on a large number of buildings in an area, such as an industrial area, commercial area, residential area, city center, entire city, etc. Optionally, the system may be sealed and/or protected. Optionally, the system may be weather-proof. Optionally, the system may be portable. Optionally, the system may be easy to install. Optionally, the system may be installed inside and/or outside a building. Optionally, the system may include components that may be permanently mounted to the building. Optionally, the system may include components that may be permanently mounted to the building and/or components which may be attached to the permanently mounted components for periodic testing.

In some embodiments, the system may aid in prevent tragic unpredicted collapses. Optionally, the system may be helpful in detecting illegal and/or improper construction, and/or assessing damage, and/or locating damaged areas for rescue operations in catastrophic events (e.g., earthquakes, wars, such as bombs, artillery fire, etc.), and/or detecting explosions (e.g., terrorist activity), illegal underground digging (e.g., criminal, terrorist, etc.), and/or major accidents (e.g., trucks, aircraft), and/or traffic patterns (e.g., developing, changing, unusual e.g., a lot of vibration from traffic along a particular route), and/or the like. The system may be used to identify changes in a structure due to external events. For example, excavations and/or changes in nearby buildings may bring structural changes to a building. These changes may be identified and/or measured. For example, sensors previously placed and/or new instruments placed in an existing building may be employed to identify or ruling out structural damage, following construction in a neighboring building. Optionally, vulnerabilities will be found in the stability and/or strength of the structure being tested. Optionally changes will be documented and/or associated (for example in time) with construction events in a neighboring structure. For example, construction events may include excavation and/or new construction. In some embodiments, the system facilitates providing an assessment of the damage to the building itself and/or the cause of the damage (e.g., based on a match between the continuous monitoring of the building and events in the construction work).

In some embodiments, the system may provide real-time information about earthquakes that occur in the vicinity of the building and/or their effect on the building itself. Optionally, the system may monitor changes in a buildings' structure before and/or during and/or after a seismic event and/or other event (e.g., surrounding infrastructure works and/or building facilities near the structure and/or inside the structure). Optionally, the system may monitor self-frequencies (natural frequencies) and/or assess the extent of damage to the building structure from an event itself. Optionally, the system may facilitate assessment of structural weakening due to an event, e.g., a seismic event. Optionally, the system may provide a warning of a seismic event above a certain magnitude.

In some embodiments, the system may be used as a scientific tool to support building maintenance. Optionally, the system may enable wise decisions to be made in managing the maintenance of the building. Optionally, the system may be of great value in determining when maintenance is required, e.g., decisions for building maintenance are currently made visually and/or randomly and/or after catastrophic failure. Optionally, continuous monitoring of the structure may enable informed decisions to be made regarding the date and/or the type of maintenance required.

In some embodiments, the system may be used in buildings of public importance and historical importance. Optionally, the system may be installed in buildings of high public importance (e.g., police stations, hospitals, security buildings, power stations, water mains, gas mains, etc.), which may be designed to function during emergencies (such as, seismic events, wars, riots, etc.). Optionally, the system may be installed in buildings that may be highly populated (e.g., as schools, municipal buildings, hospitals, etc.), halls and stadiums where crowds are expected. Optionally, it may be extremely important to carry out a periodic inspection that reflects the degree of weakening of the structures, and/or to ensure that there is no structural weakening during and/or after a seismic event, particularly in older buildings that do not meet current building standards.

In some embodiments, the system may include a microelectromechanical system (MEMS). Optionally, the MEMS may include a microcontroller, which may be connected to one or more sensors. Optionally, the system may include a connection to a rechargeable battery, a local power grid, a memory storage device, and/or any combination thereof.

In some embodiments, the microcontroller may be a multi-core processor (e.g., a 4-core processor, at speeds of up to 1000 MHz). Optionally, the microcontroller may be connected to one or more sensors e.g., by a USB cable, RJ45, HDMI, Wi-Fi, LAN, cellular network, satellite network, etc. Optionally, the rechargeable battery may allow the system to function without connecting to the main power grid, such as in the event of an emergency, etc. Optionally, the rechargeable battery may allow the system to function without connecting to the main power grid for about 1 day, about 2 days, about 3 days, about 5 days, 10 days, etc. Optionally, the memory storage device may be a memory card (e.g., a 32 GB memory card. Optionally, the memory storage device may allow data to be stored for several consecutive days or weeks.

In some embodiments, the system may be conveniently and/or simply operated by an app on a user interface, e.g., a computer, laptop, tablet, cellular phone, console, etc. Optionally, the system may be operated by a dedicated device. Optionally, the system may be reliable, and/or convenient, and/or easy to operate.

In some embodiments, the invention may relate to a building monitoring device, a system to monitor (any and/or all of the events above), a method to monitor a building (including analysis and or integration of data from multiple buildings and over various time frames).

### Reference is now made to the figures.

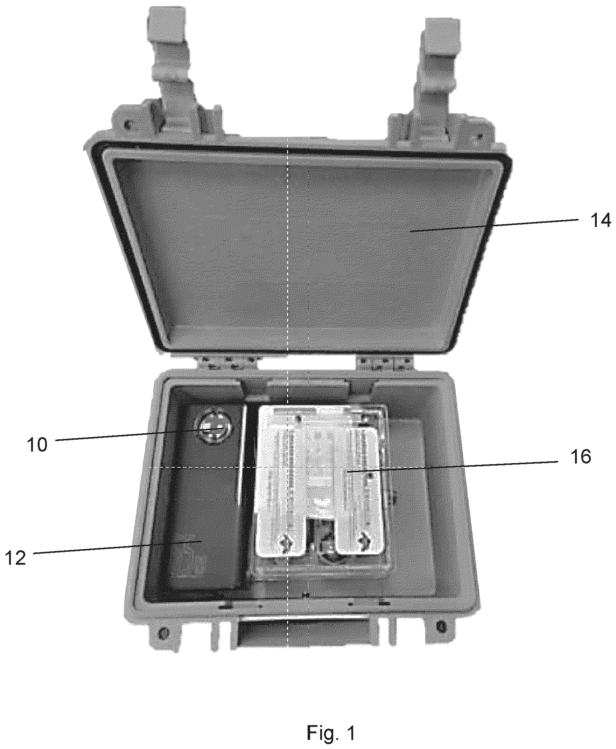

Fig. 1 is a schematic diagram illustrating a system to monitor building integrity, in accordance with an embodiment of the current invention. For example, the system may be a compact kit, which may be portable and/or easily installed inside and/or outside a building. Optionally, the kit may include a weatherproof housing 14, one or more sensors 10, a controller (not shown), a rechargeable battery 12, and various connectors 16. Optionally, some components of the system may be permanently mounted to and/or within and/or within the vicinity of the building, e.g., one or more sensors, controller, data relay, etc. Optionally, some components of the system may be permanently mounted to the building structure, and/or parts thereof. For example, the kit may include mounts for connecting vibration sensors onto wall, furniture, beams, pillars etc. Optionally, some components of the system may be multi-use components. Optionally, some components of the system may be used for periodic testing. Optionally, some components of the system may be single use components and/or disposable, e.g., connectors, etc. Optionally, some components of the system may be portable. Optionally, some components of the system may be repeatedly and/or reversibly connected to the permanently mounted components.

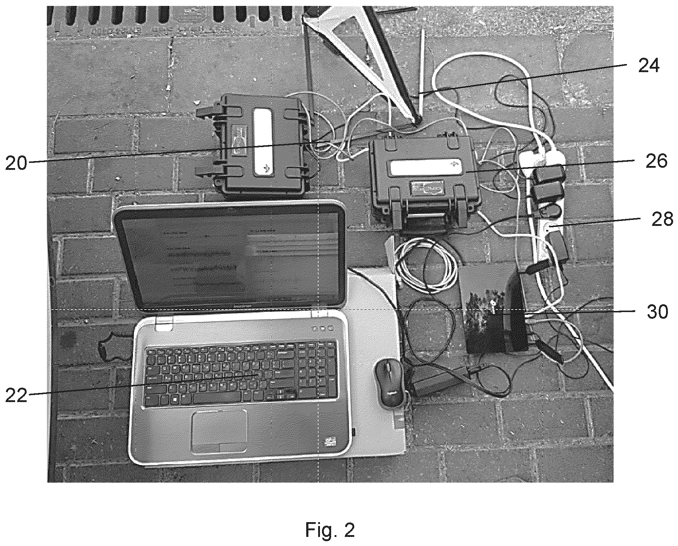

Fig. 2 is a schematic diagram illustrating a system to monitor building integrity, in accordance with an embodiment of the current invention. In some embodiments, the system may be utilized for monitoring and diagnosing a structure in real time and retrospectively of the structure's fluctuations during events, (e.g., seismic events, etc.), damage to the building's structural skeleton, building obsolescence and/or routine aging. In some embodiments, the kit may include equipment (sensors, mounting systems, communications equipment) for sensors may be mounted to a building and/or remain and/or be monitored remotely over a long time. The response of the building to natural vibrations may be measured over a long time. Optionally, the system may include remote data collecting equipment. For example, the remote data collection may include uploading data to a network and/or the Internet. Alternatively or additionally, data may be stored locally and uploaded over a local wireless channel (e.g., Bluetooth). Alternatively or additionally the kit may include mobile equipment for periodic visits, data collection and/or forced stimuli.

In some embodiments, the system may comprise one or more compact kits 26, which may be portable and/or easily installed inside and/or outside a building. Optionally, kit 26 may include various components, such as, a weatherproof housing, a microelectromechanical system (MEMS) including a microcontroller, connected one or more sensors, a rechargeable battery, a connection to a local power grid, a memory storage device, a database and/or any combination thereof. For example, the system may include some or all of the following components, acceleration sensors, speed sensors, angular velocity sensors, electrical circuit board and/or boards, computer board, modem router, server for data storage, dedicated software for data analysis, application.

Optionally, the system may generate routine reports and/or send alerts to the user (e.g., tenant, building manager, maintenance company, emergency services, etc.). Optionally, the system may include one or more kits. Optionally, the kits may be permanently mounted to and/or within and/or within the vicinity of the building. Optionally, the sensors and/or kits may measure various parameters from one or more sampling locations of the building and/or its' surroundings. Optionally, sampling locations may include elevators, supporting walls, roof, basement floor, structural parts (e.g., beams, pillars, foundation, etc.), locations outside the building (e.g., background parameters, etc.)

For example, one or more kits 26 may be connected by connectors 20 to a local power grid 28, and/or a memory storage device 30, and/or a data relay 24, and/or a user interface 22. Optionally, the kits 26 may include one or more sensors, which may be mounted to the structure permanently and/or report data over a long period of time. Additionally, or alternatively, sensors may be temporarily positioned and/or mounted in, on and/or around the structure. For example, monitoring may be done periodically. Optionally, some components of the system may be permanently mounted to and/or within and/or within the vicinity of the building, e.g., one or more sensors, controller, data relay, etc. Optionally, some components of the system may be permanently mounted to the building structure, and/or parts thereof. Optionally, some components of the system may be multi-use components. Optionally, some components of the system may be used for periodic testing. Optionally, some components of the system may be single use components and/or disposable, e.g., connectors, etc. Optionally, some components of the system may be portable. Optionally, some components of the system may be repeatedly and/or reversibly connected to the permanently mounted components.

In some embodiments, various measuring systems may be used. For example, a device may be based on geophones and/or another a multi-sensor technology, for example, as used in monitoring active earthquake areas. For example, there may be a sensor panel with multiple (e.g., three) acceleration sensors. Optionally, the system may facilitate measurement of medium- or strong vibrations (e.g., earthquakes), in X, Y and/or Z directions. Optionally, a velocity sensor enables measurement of high-sensitivity vibrations in Z direction, e.g., to obtain micro-seismic data. Optionally the system includes data acquisition and/or storage and/or analysis hardware and/or software to track temporal changes and/or patterns in the data.

In some embodiments, the system may measure strong and/or micro-seismic vibrations. For example, it may enable measuring dynamic behavior of a structure by switching between the sensor signals, e.g., for monitoring vibrations with relatively high amplitudes and/or monitoring micro-vibrations (e.g., in the Z direction).

In some embodiments, the system may facilitate monitoring local seismic vibrations of various magnitudes, including strong earthquakes and micro-seismic ones. Optionally, velocity sensors may be connected to a board allowing measurement of high-sensitivity vibrations in some and/or all directions. Optionally, the quality of the recorded signals may facilitate investigation of damped vibration in the building, high quality detecting of vibration frequencies, effective noise filtering and/or performing mathematical operations.

In some embodiments, the system may include software for mathematical and/or statistical analysis of the data. For example, a seismic wave analysis and monitoring package may be used. Seismic waves may be monitored and/or analyzed in real time. Optionally, the software may facilitate viewing the recorded signals, perform Fourier transform, noise filtering, creating the frequency spectrum, etc. Optionally, the system may perform Fourier transform (Fast Fourier transform (FFT) and/or Discrete Fourier transform (DFT)), facilitate using digital filters of FFT lowpass, high-pass, notch frequencies and band-pass, etc. For example, seismic vibration and/or a Fourier domain representation data including self-dynamic parameters may be displayed and/or analyzed. Examples of commercial software for such calculations includes STRAP STRuctural Analysis Program available from Atir Engineering Software Development Ltd 13 Kehilat Saloniki 6951313 Tel Aviv ISRAEL and ETABS available from Computers and Structures INC. 36 West 44th Street Suite 300 New York, NY 10036 USA.

In some embodiments, machine learning systems will be used, for example to identify patterns in the data obtained individually and horizontally on groups of buildings with similar properties. Optionally, big data routines will be used, for example, to search for and/or identify patterns of behavior based on existing data sources.

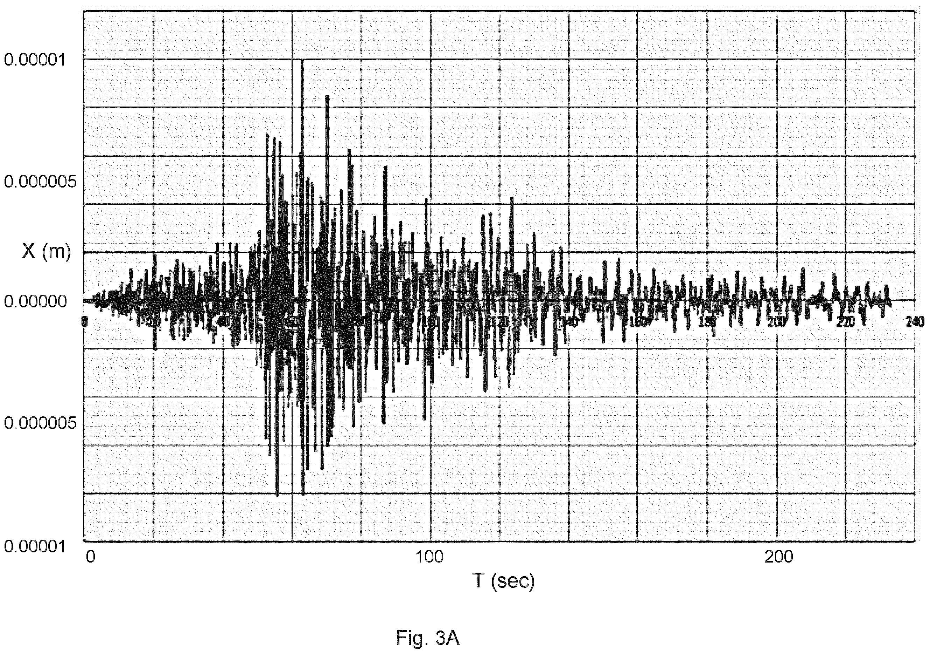

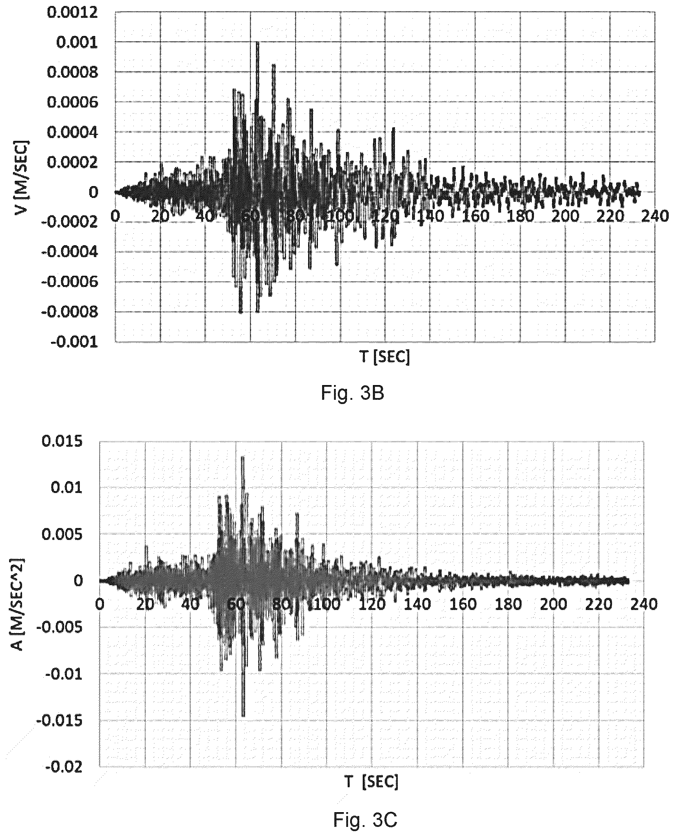

Figs. 3A-C are graphs showing identity data generated by a system to monitor building integrity including self-dynamic parameters in accordance with an embodiment of the current invention. For example, Figs. 3A, 3B and 3C illustrate graphs of displacement, velocity over time and acceleration over time respectively. The velocity and/or acceleration data may be used to compute eigenfrequencies of the system and/or vibration periods (e.g., for various eigenmodes). Some exemplary self-dynamic parameters may include cycle times, natural frequencies, First, speed, acceleration, decay rate of vibrations, etc. For example, changes in cycle time such as - increasing cycling time may imply material fatigue such as lose stiffness and/or resilience; changes such as reduced acceleration may imply material fatigue; rate of decay of vibration may change if vibration starts becoming damped (e.g., rate of decay increases) this may imply that there may be cracks developing (e.g., heterogeneities damping natural resonance); etc.

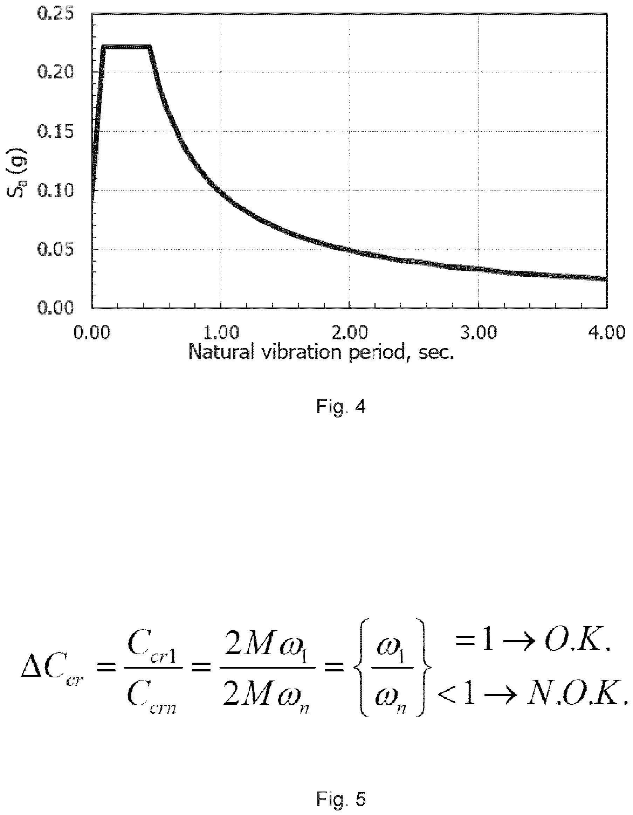

Fig. 4 is a graph of a design spectrum for an exemplary building, in accordance with some embodiments. For example, the spectral acceleration parameter (Sa) for various vibration periods. The graph shows the spectral acceleration coefficient for a natural vibration period. For example, the velocity and/or acceleration data may be used to compute vibration period as illustrated in computations of Fig. 5 where M is the mass of the structure, and ω the angular velocity at time step i.

Fig. 5 shows exemplary computation of a vibration period. For example, the vibration period may be used to analyze the stiffness of the structure. For example, if the vibration period increases over time, this may be a sign that the system is fatiguing (becoming less stiff). Changes in the vibration period as structural elements added to a building may be used to monitor the effect of the building. For example, adding structural supports and/or stiffening the structure may reduce the natural vibration period, while adding mass to the structure may increase the natural vibration period. Another sign of possibly significant changes in a structure may include changes in geometry. For example, if the geometric relationship between parts of the structure and/or between the structure and a fixed object are changing over time.

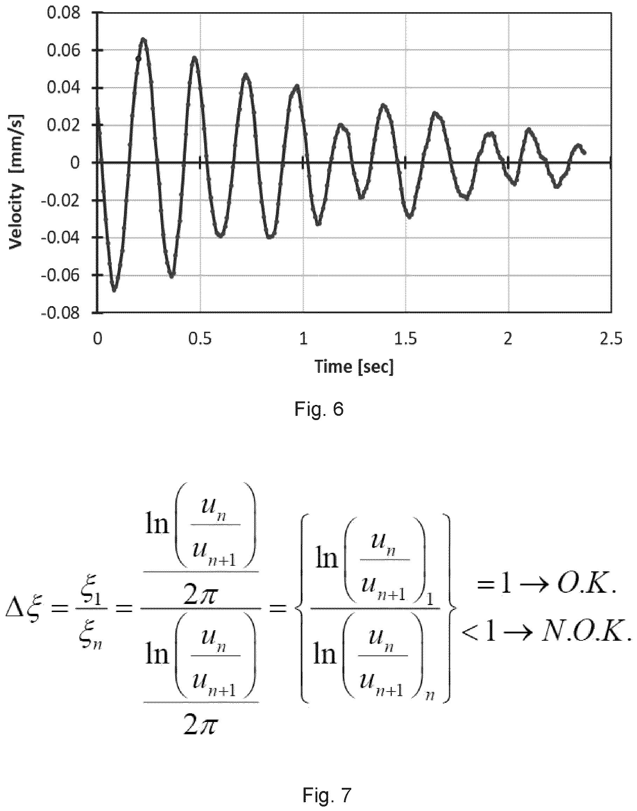

Fig. 6 is an illustration of velocity during vibrations, in accordance with some embodiments. For example, over time the amplitude of the velocity peaks is reduced (damping). The rate of damping may be represented, for example, as a logarithmic damping coefficient as is illustrated for example, in the calculations of Fig. 7 wherein *uᵢ* is the velocity at time step i. For example, increase in the damping coefficient over time (the structure ceases to vibrate more quickly than in the past) this may be a sign of structural damage. For example, if there were two similar pillars vibrating with resonation in a certain frequency, increased damping may be a sign that a crack is developing in one of the pillars reducing the resonance and increasing damping of vibrations.

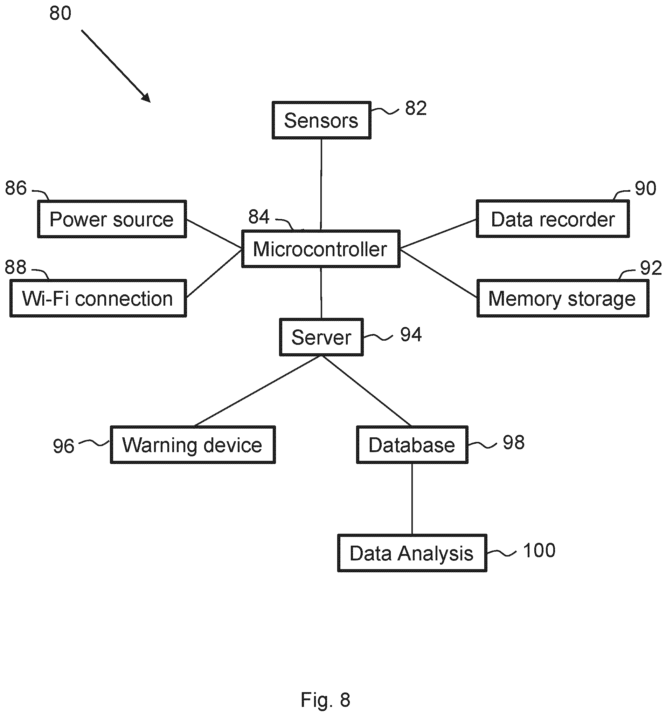

Fig. 8 is a block diagram describing a system to monitor building integrity in accordance with an embodiment of the current invention. For example, system 80 may comprise a microelectromechanical system (MEMS) including a microcontroller 84, connected to one or more sensors 82 (e.g., an accelerometer, gyroscope, infrasound sensor, seismometer, seismograph accelerations, motion seismograph, stroboscope, tachometer, rotameter(gyro), motion sensors, magnetometer, etc.), a power source 86, such as a rechargeable battery, optionally, a connection to a local power grid, a memory storage device 92, a data recorder 90 and/or any combination thereof. Optionally, the system may include a data relay 94 (e.g., a server, a Wi-Fi network 88), a warning device 96, a connection to one or more databases 98 and/or a data analysis system 100.

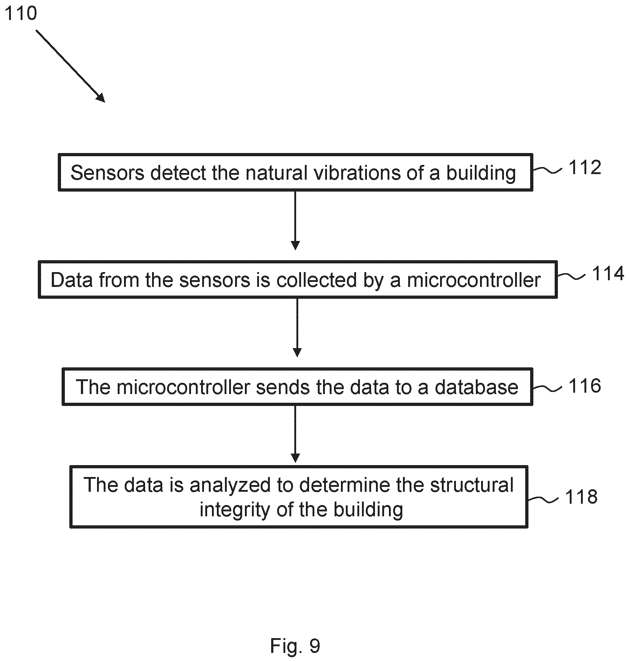

Fig. 9 is a flow diagram describing a use of a system to monitor building integrity in accordance with an embodiment of the current invention. For example, in method 110, sensors (e.g., an accelerometer, infrasound sensor, gyroscope, seismometer, seismograph accelerations, motion seismograph, stroboscope, tachometer, rotameter(gyro), motion sensors, magnetometer, etc.) detect 112 the natural vibrations of a building. The data from the sensors is collected 114 by a microcontroller. The data may then be stored 116 in a database and/or analyzed 118 to determine the structural integrity of the building. An engineering identity structural logbook of the building may be created based on natural vibration data collected. Changes to the natural vibration data from the data in the engineering identity card may be an indication of structural weakening, etc.

Various embodiments and aspects of the present invention as delineated hereinabove and as claimed in the claims section below find experimental support in the following examples.

### EXAMPLES

Reference is now made to the following examples, which together with the above descriptions illustrate some embodiments of the invention in a non-limiting fashion.

The exemplary application, comes to investigate and validate the existing practice for strengthening and upgrading a building in seismic regions under National Outline Plan No. 38. Experiments and numerical analysis are performed on a real existing residential building that required strengthening and up-grading. A corresponding methodology was proposed for monitoring of strengthening and up-grading processes, including selecting of measurement devices and their use. Using sensors with high sensitivity enabled measurement micro-vibrations and investigate the recorded signal to obtain the building natural vibration frequencies. Experimental measurements allowed to distinguish different frequencies of the building at all strengthening and upgrading stages. The measured dynamic parameters of the building allow more accurate calculation of seismic forces for all of these stages and consequently makes the design more effective. Therefore, it is recommended to perform monitoring of buildings at each stage of seismic strengthening and upgrading. The experiments were performed on a typical residential reinforced concrete (RC) building, constructed in the late 1970s. The building has 4 floors and a non-occupied ground floor.

The analytical and experimental evaluation of the building dynamic parameters were performed for 11 different stages corresponding to the phases of the building strengthening and upgrading (Table 1). The analytical and experimental results obtained at each of the phases are compared in order to validate the desired strengthening effect for improving the design procedure.

The process of the building strengthening and upgrading was divided into the following 11 stages:
- Stage 0 - the existing building before beginning the works on the site: the building was modeled according with its state (as is) following the guidelines of the modem code;
- Stage 1 - after completing the excavation for strengthening the foundations: the model is similar to that for stage 0, considering the excavation works required for strengthening the foundation that opened the ground floor columns by about 1 m;
- Stage 2 - after completing the ground floor columns, walls and ceiling: the model is based on that for stage 1, when walls and stiffening cores were added on the ground floor of the building;
- Stages 3-9 -after completing the columns, walls and ceiling of the 1st - 7th floors, respectively;
- Stage 10 - structure in service condition after completion of all non-structural elements (the model based on that for step 9 and full-service loads).

Before beginning of the construction works related to the building strengthening and upgrading, sensors were installed. The sensors were placed at the roof and ground floors of the existing building as well as on the ground outside the building. As the upgrading works progressed, the sensors were located on the top floor after completing the ceiling of each floor.

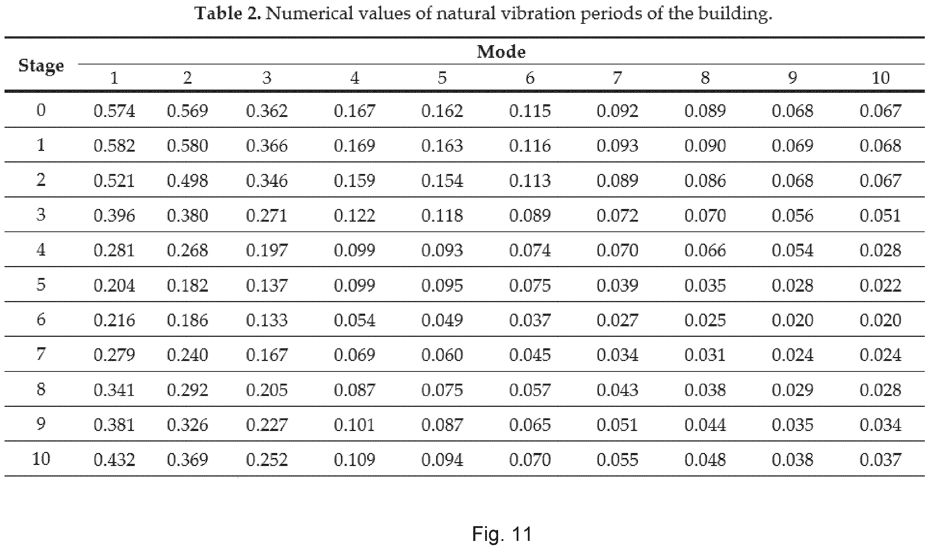

Numerical values of the building natural vibration periods corresponding to the first 10 eigen modes are presented in Table 2. As it follows from Table 2, the numerical values (Fig. 11) of dominant natural vibration period for all eigen modes increase from stage 0 to stage 1 and decrease from stage 1 to stage 5 (when the stiffness of the building increases) and it corresponds to the building strengthening stages without adding floors. At those stages the contribution of additional stiffness is dominant relative to the mass of the walls. At stage 6 the dominant natural vibration period remains practically without significant change. From stage 7, when new floors are added, the tendency changes and the dominant natural vibration period begins to increase. The dominant vibration period after completing the works (stage 10, T = 0.432 sec.) is low-er, compared to that of the building before strengthening and upgrading (stage 0, T = 0.574 sec.), which means that the building was indeed strengthened.

Experimental values of the building natural vibration periods corresponding to the first 4 eigen modes are presented in Table 3. The eigen modes were obtained by FFT of the recorded building's vibrations under natural combination of different dynamic loads, like traffic, wind, etc. The dynamic loading vector is random and constantly changes its direction. In this case the building response in the main direction corresponds to forced vibration under the external loading.

As it follows from Table 3, the experimental values of natural vibration periods are lower, compared to the calculated ones (Table 2). This may be explained, on one hand, by the fact that the original building was constructed during a period when there was no seismic design code. On the other hand, there is no detailed design documentation of the building, allowing calculation of its exact stiffness. The stiffness of structural elements was estimated according to modern codes. This means that the real stiffness may be higher (as it follows from the experimental data). Therefore, the numerical values of the building's dynamic parameters may be interpreted just as qualitative ones, compared to experimental results. Correspondingly, the building's strengthening design as well as its upgrading should be based on experimental data.

At the same time, following the experimental results, the dominant natural vibration period increases at stage 1, compared to stage 0 and decreases from stage 1 to stage 5. After that the dominant vibration period values increase, i.e. like in case of numerical values, the tendencies are similar. This demonstrates qualitative correspondence of experimental and numerical results.

These embodiments are provided by way of example and are in no means intended to limit the scope of the invention.

While the invention has been described in its preferred form or embodiment with some degree of particularity, it is understood that this description has been given only by way of example and that numerous changes in the details of construction, fabrication, and use, including the combination and arrangement of parts, may be made without departing from the spirit and scope of the invention.

### GENERAL

It is expected that during the life of a patent maturing from this application many relevant building technologies, artificial intelligence methodologies, computer user interfaces, image capture devices will be developed and the scope of the terms for design elements, analysis routines, user devices is intended to include all such new technologies *a priori.*

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

As will be appreciated by one skilled in the art, some embodiments of the present invention may be embodied as a system, method or computer program invention. Accordingly, some embodiments of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, some embodiments of the present invention may take the form of a computer program product embodied in one or more computer readable medium(s) having computer readable program code embodied thereon. Implementation of the method and/or system of some embodiments of the invention can involve performing and/or completing selected tasks manually, automatically, or a combination thereof. Moreover, according to actual instrumentation and equipment of some embodiments of the method and/or system of the invention, several selected tasks could be implemented by hardware, by software or by firmware and/or by a combination thereof, e.g., using an operating system.

For example, hardware for performing selected tasks according to some embodiments of the invention could be implemented as a chip or a circuit. As software, selected tasks according to some embodiments of the invention could be implemented as a plurality of software instructions being executed by a computer using any suitable operating system. In an exemplary embodiment of the invention, one or more tasks according to some exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

Any combination of one or more computer readable medium(s) may be utilized for some embodiments of the invention. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, and/or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium and/or data used thereby may be transmitted using any appropriate medium, including but not limited to wireless, wireline, optical fiber cable, RF, etc., or any suitable combination of the foregoing.

Computer program code for carrying out operations for some embodiments of the present invention may be written in any combination of one or more programming languages, including an object-oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Some embodiments of the present invention may be described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

Data and/or program code may be accessed and/or shared over a network, for example the Internet. For example, data may be shared and/or accessed using a social network. A processor may include remote processing capabilities for example available over a network (e.g., the Internet). For example, resources may be accessed via cloud computing. The term "cloud computing" refers to the use of computational resources that are available remotely over a public network, such as the internet, and that may be provided for example at a low cost and/or on an hourly basis. Any virtual or physical computer that is in electronic communication with such a public network could potentially be available as a computational resource. To provide computational resources via the cloud network on a secure basis, computers that access the cloud network may employ standard security encryption protocols such as SSL and PGP, which are well known in the industry.

Some of the methods described herein are generally designed only for use by a computer, and may not be feasible or practical for performing purely manually, by a human expert. A human expert who wanted to manually perform similar tasks might be expected to use completely different methods, e.g., making use of expert knowledge and/or the pattern recognition capabilities of the human brain, which would be vastly more efficient than manually going through the steps of the methods described herein.

As used herein the term "about" refers to ± 10%
The terms "comprises", "comprising", "includes", "including", "having" and their conjugates mean "including but not limited to".

The term "consisting of" means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

As used herein, the singular form "a", "an" and "the" include plural references unless the context clearly dictates otherwise.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention. To the extent that section headings are used, they should not be construed as necessarily limiting.

## Claims

1. A method for monitoring integrity of a structure, the method comprising:
detecting vibrations of the structure by at least one sensor;
collecting data from the at least one sensor to a microcontroller;
analyzing the data to determine structural integrity of the structure.

2. The method according to claim 1, further comprising generating an engineering identity structural card of the structure based on natural vibration data collected.

3. The method according to claim 2, wherein the analyzing comprises analyzing data from said sensors in conjunction with data from at least one database.

4. The method according to claim 3, wherein the analyzing facilitates determining changes to the natural vibration data from the data in the engineering identity card of the structure.

5. The method according to claim 4, further comprising alerting a user to a determined change in the natural vibration data from the data in the engineering identity card of the structure.

6. The method of claim 1, wherein the vibrations include natural vibrations.

7. The method of claim 1, wherein the vibrations include forced vibrations, the method further comprising forcing said vibrations.

8. A microelectromechanical system for monitoring integrity of a structure comprising:
a microcontroller;
a sensor connected to the microcontroller;
a power source configured to power the sensor and the microcontroller; and
a data analysis system configured to analyze data received from the sensor to determine a condition of the structure.

9. The microelectromechanical system of claim 8, wherein the system is configured to be mounted to, at least one part of the structure.

10. The system according to claim 8, wherein the sensor is selected from the group consisting of an accelerometer, gyroscope, infrasound sensor, seismometer, seismograph accelerations, motion seismograph, stroboscope, tachometer, rotameter(gyroscope), motion sensors, magnetometer, or any combination thereof.

11. The system according to claim 8, wherein the sensor is connected to at least one part of the structure selected from an elevator, supporting wall, roof, basement floor, structural parts, beams, pillars, foundation, or any combination thereof.

12. The system according to claim 8, further comprising a data relay selected from the group consisting of a network, wi-fi, cellular network, satellite network, LAN, the Internet, a cellular model, a SIM module, an app, a USB interface, a Bluetooth transceiver, or any combination thereof.

13. The system according to claim 8, further comprising at least one database selected from the group consisting of an engineering database, geological database, weather database, traffic database, event database, materials database, database of recorded data from said structure or surroundings, or any combination thereof.

14. The system according to claim 13, wherein the data analysis system is configured to analyze data from said sensors in conjunction with data from said databases.

15. The system according to claim 8, further comprising a warning device configured to provide a warning of structural weakening, collapse, partial collapse, a seismic event, or any combination thereof.
